# EUROPEAN PATENT SPECIFICATION

(11) **EP 4 190 552 B1**
(45) Date of publication and mention of the grant of the patent: **20.11.2024**
(21) Application number: 22211820.0
(22) Date of filing: 06.12.2022
(51) Int. Cl.: B32B 5/26, B32B 7/027, B32B 37/00

(54) **COMPOSITES AND METHODS OF FORMING COMPOSITES HAVING TAILORED CTE**
VERBUNDWERKSTOFFE UND VERFAHREN ZUR HERSTELLUNG VON VERBUNDWERKSTOFFEN MIT MASSGESCHNEIDERTEM CTE
COMPOSITES ET METHODES DE FORMATION DE COMPOSITES AYANT UN CTE SUR MESURE

(30) Priority: 06.12.2021 US 202163286468 P; 13.07.2022 US 202217864174
(43) Date of publication of application: 07.06.2023
(73) Proprietor: Rohr, Inc., Chula Vista, CA 91910-2098 (US)
(72) Inventor: KUKUCHEK, Paul E., San Diego, 92131-1451 (US); PUJAR, Vijay V., Rancho Santa Fe, 92067-5010 (US)
(74) Representative: Dehns

(56) References cited:
- US-A- 5 230 946
- US-A- 5 465 023

## Description

### FIELD

The present invention relates to composites, and more specifically, to composite parts having a tailored coefficient of thermal expansion (CTE).

### BACKGROUND

Carbon/carbon ("C/C") composites consist of carbon fibers in a carbon matrix. C/C composites are used to form parts in various industries. For example, C/C parts may be employed in aerospace applications due to the superior high temperature characteristics of C/C. However, carbon fiber is unique in that it has a negative CTE. Differences in the expansion of a C/C part and the expansion of a component mounted to the C/C part, due to the CTE of C/C part being different from the CTE of the component, can generate stress, which may lead to separation and/or damage to the parts. Similarly, variations in the expansion of a C/C part and a coating applied to the C/C part can lead to cracks in the coating. Finally, the accuracy of aerospace guidance and/or dimensionally stable equipment can be affected by thermal expansion of the structure to which the equipment is attached.

US 5,230,946 discloses carbon-carbon composite materials.

US 5,465,023 discloses a carbon-carbon grid for ion engines.

### SUMMARY

In accordance with an aspect of the present invention, there is provided a composite structure in accordance with claim 1.

Optionally, the second fiber layer further includes a second carbon fiber tow having the first coefficient of thermal expansion. In various embodiments, the non-carbon fiber tow of the second fiber layer is at least one of a silicon carbide fiber or a silicon nitride fiber.

Optionally, a first portion of the fiber reinforced composite material comprises a first number of fiber layers, and a second portion of the fiber reinforced composite material comprises a second number of fiber layers greater than the first number of fiber layers.

Optionally, a fastener is located through the second portion of the fiber reinforced composite material, and a coefficient of thermal expansion of the fiber reinforced composite material in the second portion of the fiber reinforced composite material is approximately equal to a coefficient of thermal expansion of the fastener.

Optionally, a coefficient of thermal expansion of the fiber reinforced composite material in the first portion of the fiber reinforced composite material is different from a coefficient of thermal expansion of the fiber reinforced composite material in the second portion of the fiber reinforced composite material.

Optionally, a coating may be applied over the fiber reinforced composite material. The coefficient of thermal expansion of the fiber reinforced composite material is approximately equal to a coefficient of thermal expansion of the coating.

Optionally, a coefficient of thermal expansion of the fiber reinforced composite material is approximately zero.

According to another aspect of the present invention, there is provided a method of making a composite structure for use in conjunction with an aerospace component having a target coefficient of thermal expansion in accordance with claim 8.

Optionally, a first fiber layer of the plurality of fiber layers includes a first carbon fiber tow having the first coefficient of thermal expansion, and a second fiber layer of the plurality of fiber layers includes a non-carbon fiber tow having the second coefficient of thermal expansion.

Optionally, the method further comprises forming the second fiber layer by weaving the non-carbon fiber tow with a second carbon fiber tow having the first coefficient of thermal expansion.

Stacking the plurality of fiber layers includes interleaving a plurality of carbon fiber layers with a plurality of non-carbon fiber layers.

Optionally, the method further comprises forming each fiber layer of the plurality of fiber layers by weaving a carbon fiber tow having the first coefficient of thermal expansion with a non-carbon fiber tow having the second coefficient of thermal expansion.

Optionally, stacking the plurality of fiber layers includes forming a first portion of the fiber reinforced composite material having a first number of fiber layers and forming a second portion of the fiber reinforced composite material having a second number of fiber layers greater than the first number of fiber layers. The second portion of the fiber reinforced composite material includes the coefficient of thermal expansion that is approximately equal to the target coefficient of thermal expansion of the aerospace component.

Optionally, the aerospace component is formed of at least one of a metal or a metal alloy.

Optionally, the method further comprises dispersing a plurality of ceramic particles in the carbon matrix of the fiber reinforced composite material.

According to another aspect of the present invention, there is provided an aerospace component in accordance with claim 14.

Optionally, a plurality of ceramic particles is dispersed in the carbon matrix.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates an aerospace component including a composite structure formed of fiber reinforced composite material having a tailored CTE, in accordance with the various embodiments;
FIG. 2 illustrates a fiber layup for forming the fiber reinforced composite material of the composite structure in FIG. 1, in accordance with the various embodiments;
FIGs. 3A and 3B illustrate a perspective view and a cross-sectional view, respectively, of an aerospace component including a composite structure formed of fiber reinforced composite material, in accordance with various embodiments; and
FIGs. 4A and 4B illustrate a method of making a composite structure having a tailored CTE, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not of limitation. The scope of the invention is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option.

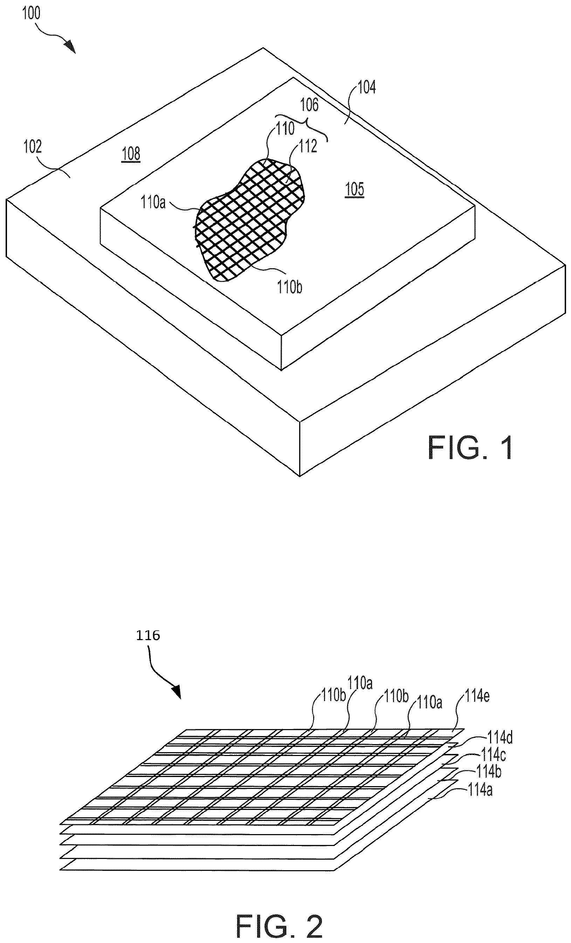

With reference to FIG. 1, an aerospace component 100 is illustrated. In various embodiments, aerospace component 100 includes a first structure 102 and a composite structure 104 mounted to the first structure 102. A composite structure 104 is formed of a fiber reinforced composite material 106. In various embodiments, a coating 105 may be applied over fiber reinforced composite material 106. First structure 102 is formed of a first material 108. In various embodiments, first material 108 may be a metal or a metal alloy. For example, first material 108 may be titanium, a titanium-alloy, a nickel-alloy, or a nickel-based super alloy, such as INCONEL.

In accordance with various embodiments, a CTE of the fiber reinforced composite material 106 of composite structure 104 is tailored to match a target CTE. Stated differently, the CTE of fiber reinforced composite material 106 may be approximately equal to the target CTE. As used in the previous context only, "approximately equal" means the CTE of fiber reinforced composite material 106 is within ± 5.0% of the target CTE. In various embodiments, the target CTE is the CTE of first material 108. In various embodiments, the target CTE is the CTE of coating 105. In various embodiments, the target CTE is zero.

In accordance with various embodiments, fiber reinforced composite material 106 includes fibers 110 and a matrix 112 surrounding fibers 110. In accordance with various embodiments, fibers 110 include a plurality of carbon (or first) fibers 110a and a plurality of non-carbon (or second) fibers 110b. As used herein, "carbon fiber" refers to a fiber that is formed essentially of only carbon (e.g., a fiber that is at least 90% carbon, at least 95% carbon, at least 98% carbon, at least 99% carbon, at least 99.5% carbon, and/or at least 99.8% carbon). As used herein, "non-carbon fiber" refers to a fiber that includes elements other than, or in addition to, carbon. In this regard, "non-carbon" does not mean devoid of carbon. For example, in various embodiments, non-carbon fibers 110b include silicon carbide (SiC) fibers. In various embodiments, non-carbon fibers 110b include silicon nitride fibers. In accordance with various embodiments, non-carbon fibers 110b have a CTE that is greater than the CTE of carbon fibers 110a. For example, non-carbon fibers 110b may have a CTE of greater than 2.5 × 10⁻⁶/°C.

In various embodiments, fiber reinforced composite material 106 includes a plurality of stacked fiber layers. With additional reference to FIG. 2, in various embodiments, fiber reinforced composite material 106 may be formed by stacking a plurality of fiber layers, such as, first fiber layer 114a, second fiber layer 114b, third fiber layer 114c, fourth fiber layer 114d, and fifth fiber layer 114e (collectively fiber layers 114) to form a fiber layup 116. Fiber layers 114 include carbon fibers 110a (also referred to as carbon tows) and non-carbon fibers 110b (also referred to a non-carbon tows).

Fiber layup 116 may be formed utilizing either oxidized polyacrylonitrile (PAN) fibers (referred to as "OPF" fibers) or carbonized carbon fibers for carbon fibers 110a. Carbon fibers 110a and non-carbon fibers 110b are used to fabricate a preform using a needle punching process. For example, carbon fibers 110a and non-carbon fibers 110b are layered in a selected orientation to form fiber layup 116 of a selected geometry. Typically, two or more layers of fibers are layered onto a support and are then needled together simultaneously or in a series of needling steps. This process interconnects the horizontal fibers with a third direction (also called the z-direction). The fibers extending into the third direction are also called z-fibers. This needling process may involve driving a multitude of barbed needles into the fibrous layers to displace a portion of the horizontal fibers into the z-direction.

In various embodiments, at least one of the fiber layers 114 includes both carbon fiber 110a and non-carbon fiber 110b. For example, in various embodiments, at least one of the fiber layers 114 may include a woven fiber layer having a weft formed of carbon fiber 110a and warps formed of non-carbon fiber 110b.

In various embodiments, one or more of fiber layers 114 may include a woven fiber layer, where the weft fibers are non-carbon fibers and the warp fibers are carbon fibers. In various embodiments, one or more of fiber layers 114 may include a woven fiber layer, where the weft fibers include non-carbon fibers and carbon fiber and the warp fibers are carbon fibers. In various embodiments, one or more of fiber layers 114 may include a woven fiber layer, where the warp fibers include non-carbon fibers and carbon fibers and the weft fibers are carbon fibers. In various embodiments, one or more of fiber layers 114 may include a woven fiber layer, where the weft fibers and the warp fibers each include non-carbon fibers interleaved with carbon fibers. The weaving pattern of the carbon and non-carbon fibers of the weft fibers and/or of the warp fibers is/are selected based on the target CTE. In this regard, the weft fibers and/or the warp fibers may include multiple carbon fiber tows between adjacent non-carbon fiber tows and/or multiple non-carbon fiber tows between adjacent carbon fiber tows. In various embodiments, each of the fiber layers 114 is woven with both carbon fibers 110a and non-carbon fibers 110b.

In various embodiments, at least one the fiber layers 114 is formed of only carbon fiber tows 110a (i.e., is devoid of non-carbon fibers 110b) and at least one of the fiber layers 114 is formed of only non-carbon fiber tows 110b (i.e., is devoid of carbon fibers 110a). For example, fiber layup 116 includes non-carbon fiber layers interleaved with carbon fiber layers. In various embodiments, fibers layers 114 may include at least one fiber layer 114 formed of only carbon fiber tows 110a and at least one fiber layer 114 formed of weaved carbon fiber tow 110a and non-carbon fiber tow 110b.

After stacking the desired number of fiber layers 114, fiber layup 116 is densified. Returning to FIG. 1, during the densification operation, carbon matrix 112 is deposited around and between the fibers 110a, 110b. Densification may be done using chemical vapor infiltration (CVI) or any other suitable carbon deposition method.

In accordance with various embodiments, the locations of carbon fibers 110a and non-carbon fibers 110b, the weave pattern of carbon fibers 110a and non-carbon fibers 110b in each fiber layer 114 (FIG. 2), and/or the ratio of carbon fibers 110a to non-carbon fibers 110b is/are selected to create a desired CTE profile through fiber reinforced composite material 106. In this regard, the locations of carbon fibers 110a and non-carbon fibers 110b, the weave pattern of carbon fibers 110a and non-carbon fibers 110b, and/or the ratio of carbon fibers 110a to non-carbon fibers 110b are configured such that the CTE of fiber reinforced composite material 106 is approximately equal the target CTE.

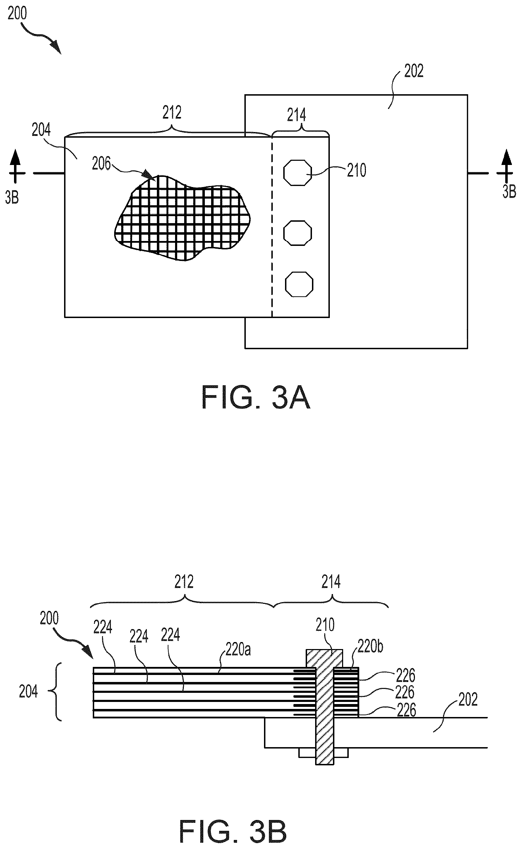

With reference to FIGs. 3A and 3B, an aerospace component 200 is illustrated. In various embodiments, aerospace component 200 includes a first structure 202 and a composite structure 204 mounted to the first structure 202. Composite structure 204 is formed of a fiber reinforced composite material 206. One or more fastener(s) 210 is/are located through fiber reinforced composite material 206. In accordance with various embodiments, the CTE profile of fiber reinforced composite material 206 is configured such that a first portion 212 of fiber reinforced composite material 206 includes a first CTE and a second portion 214 of fiber reinforced composite material 206 includes a second CTE, different from the first CTE. In various embodiments, the CTE of second portion 214 is approximately equal to the CTE of fasteners 210. Fasteners 210 may be formed of a metal or metal alloy. For example, fasteners 210 may include titanium, a titanium-alloy, a nickel-alloy, and/or a nickel-based super alloy, such as INCONEL.

Fiber reinforced composite material 206 includes carbon fibers 220a and non-carbon fibers 220b, which are similar to previously described carbon fibers 110a and non-carbon fibers 110b, respectively. In various embodiments, a ratio of carbon fibers 220a to non-carbon fibers 220b is greater in first portion 212 as compared to the ratio of carbon fibers 220a to non-carbon fibers 220b in second portion 214. For example, the weft fibers and/or the warp fibers in second portion 214 may include a greater ratio of non-carbon fibers 220b to carbon fibers 220a as compared to the ratio of non-carbon fibers 220b to carbon fibers 220a in first portion 212. Stated differently, in various embodiments, a greater percentage of the fibers located in second portion 214 may be non-carbon fibers 220b as compared to the percentage of fibers in first portion 212 that are non-carbon fibers 220b.

In various embodiments, fiber reinforced composite material 206 may be formed by forming a fiber layup, as described above with reference to fiber layup 116. Fiber reinforced composite material 206 may be formed by stacking a plurality of first fiber layers 224 and a plurality of second fiber layers 226. In various embodiments, second fiber layers 226 are located in second portion 214. In this regard, a greater number of fiber layers may be located in second portion 214 as compared to the number of fiber layers in first portion 212. In various embodiments, one or more of the second fiber layers 226 include(s) only non-carbon fibers 220b and one or more of the first fiber layers 224 include(s) only carbon fibers 220a. In various embodiments, one or more of the second fiber layers 226 include(s) non-carbon fibers 220b and carbon fibers 220a, and one or more of the first fiber layers 224 include(s) only carbon fibers 220a. In various embodiments, one or more of the second fiber layers 226 include(s) only non-carbon fibers 220b, and one or more of the first fiber layers 224 include(s) carbon fibers 220a and non-carbon fibers 220b. In various embodiments, one or more of the first fiber layers 224 and one or more of the second fiber layers 226 each include both carbon fibers 220a and non-carbon fibers 220b.

The interleaving pattern of second fiber layers 226 and first fiber layers 224 and the ratio of carbon fibers 220a to non-carbon fibers 220b in second portion 214 is selected based on the CTE of fastener 210. In this regard, the locations of carbon fibers 220a and non-carbon fibers 220b, a weave pattern of carbon fibers 220a and non-carbon fibers 220b, and the ratio of carbon fibers 220a to non-carbon fibers 220b in second portion 214 of fiber reinforced composite material 206 are selected such that the CTE of fiber reinforced composite material 206 in second portion 214 is approximately equal to the CTE of fasteners 210. As used in the previous context, "approximately equal" means the CTE of fiber reinforced composite material 206 is within ± 5.0% of the CTE of fasteners 210.

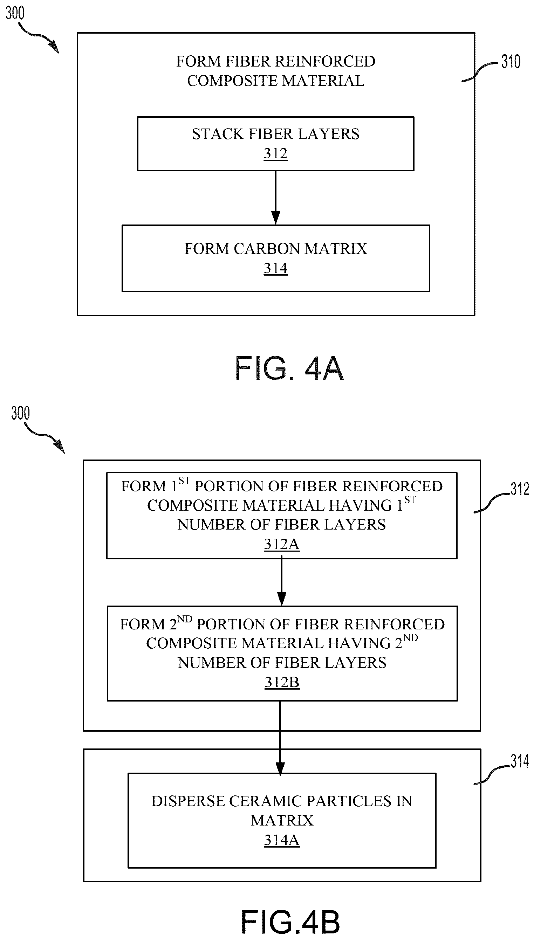

With reference to FIG. 4A, a method 300 of making a composite structure for use in conjunction with an aerospace component having a target CTE is illustrated. In various embodiments, method 300 may include forming a fiber reinforced composite having a CTE approximately equal to the target CTE (step 310). In various embodiments, step 310 may include stacking a plurality of fiber layers (step 312) and forming a carbon matrix surrounding the plurality of fiber layers (step 314). The plurality of fiber layers includes a plurality of carbon fibers and a plurality of non-carbon fibers. In various embodiments, step 312 includes interleaving a plurality of carbon fiber layers with a plurality of non-carbon fiber layers.

In various embodiments, step 310 may further include forming one or more of the fiber layers of by weaving together a non-carbon fiber tow and a carbon fiber tow. In various embodiments, step 310 may further include forming each of the fiber layers by weaving together a carbon fiber tow and a non-carbon fiber tow. In various embodiments, step 312 includes interleaving a plurality of carbon fiber layers with a plurality of non-carbon fiber layers.

With reference to FIG. 4B, in various embodiments, step 312 includes forming a first portion of the fiber reinforced composite material having a first number of fiber layers (step 312A), and forming a second portion of the fiber reinforced composite material having a second number of fiber layers greater than the first number of fiber layers (step 312B). In various embodiments, the second portion of the fiber reinforced composite material comprises a CTE that is approximately equal to the target CTE. In various embodiments, step 314 may include dispersing a plurality of ceramic particles in the carbon matrix.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A composite structure (104; 204), comprising:
a fiber reinforced composite material (106; 206) including:
a plurality of fiber layers (114; 224, 226); and
a carbon matrix (112) surrounding the plurality of fiber layers (114; 224, 226);
wherein a first fiber layer (224) of the plurality of fiber layers (114; 224, 226) includes a first carbon fiber tow (110a; 220a), and a second fiber layer (226) of the plurality of fiber layers (114; 224, 226) includes a non-carbon fiber tow (1 10b; 220b),
wherein the first carbon fiber tow (110a; 220a) has a first coefficient of thermal expansion, and the non-carbon fiber tow (110b; 220b) has a second coefficient of thermal expansion that is greater than the first coefficient of thermal expansion,
**characterised in that**:
the plurality of fiber layers (114; 224, 226) includes a plurality of carbon fiber layers interleaved with a plurality of non-carbon fiber layers, the plurality of carbon fiber layers including the first fiber layer (224), and the plurality of non-carbon fiber layers including the second fiber layer (226).

2. The composite structure (204) of claim 1, wherein a first portion (212) of the fiber reinforced composite material (206) comprises a first number of fiber layers, and wherein a second portion (214) of the fiber reinforced composite material (206) comprises a second number of fiber layers greater than the first number of fiber layers.

3. The composite structure (204) of claim 2, further comprising a fastener (210) located through the second portion (214) of the fiber reinforced composite material (206), wherein a coefficient of thermal expansion of the fiber reinforced composite material (206) in the second portion (214) of the fiber reinforced composite material (206) is equal to a coefficient of thermal expansion of the fastener (210).

4. The composite structure (204) of claim 2 or 3, wherein a coefficient of thermal expansion of the fiber reinforced composite material (206) in the first portion (212) of the fiber reinforced composite material (206) is different from a coefficient of thermal expansion of the fiber reinforced composite material (206) in the second portion (214) of the fiber reinforced composite material (206).

5. The composite structure (104; 204) of any preceding claim, further comprising a coating (105) formed over the fiber reinforced composite material (106; 206), wherein a coefficient of thermal expansion of the fiber reinforced composite material (106; 206) is equal to a coefficient of thermal expansion of the coating (105).

6. The composite structure of any preceding claim, wherein a coefficient of thermal expansion of the fiber reinforced composite material (106; 206) is zero

7. The composite structure of any preceding claim, wherein the non-carbon fiber tow (1 10b) of the second fiber layer is at least one of a silicon carbide fiber or a silicon nitride fiber.

8. A method (300) of making a composite structure (104; 204) for use in conjunction with an aerospace component (100; 200) having a target coefficient of thermal expansion, the method (300) comprising:
forming a fiber reinforced composite material (106; 206) by:
stacking a plurality of fiber layers (114; 224, 226), the plurality of fiber layers (114; 224, 226) including a plurality of carbon fibers (110a; 220a) and a plurality of non-carbon fibers (1 10b; 220b), the carbon fibers of the plurality of carbon fibers (1 10a; 220a) having a first coefficient of thermal expansion, and the non-carbon fibers of the plurality of non-carbon fibers (110b; 220b) having a second coefficient of thermal expansion, the second coefficient of thermal expansion being greater than the first coefficient of thermal expansion; and
forming a carbon matrix (112) surrounding the plurality of fiber layers (114; 224, 226),
wherein a coefficient of thermal expansion of a least a portion of the fiber reinforced composite material (106; 206) is equal to the target coefficient of thermal expansion of the aerospace component (100; 200),
**characterised in that**:
stacking the plurality of fiber layers (114; 224, 226) includes interleaving a plurality of carbon fiber layers (224) with a plurality of non-carbon fiber layers (226), the plurality of carbon fiber layers including the plurality of carbon fibers (110a; 220a), and the plurality of non-carbon fiber layers including the plurality of non-carbon fibers (1 10b; 220b).

9. The method (300) of claim 8, wherein a first fiber layer (224) of the plurality of fiber layers (114; 224, 226) includes a first carbon fiber tow (110a; 220a) having the first coefficient of thermal expansion, and wherein a second fiber layer (226) of the plurality of fiber layers (114; 224, 226) includes a non-carbon fiber tow (110b; 220b) having the second coefficient of thermal expansion.

10. The method (300) of claim 9, further comprising forming the second fiber layer (226) by weaving the non-carbon fiber tow (110b; 220b) with a second carbon fiber tow (110a; 220a) having the first coefficient of thermal expansion.

11. The method (300) of claim 9, further comprising forming each fiber layer (114; 224, 226) of the plurality of fiber layers (114; 224, 226) by weaving a carbon fiber tow (110a; 220a) having the first coefficient of thermal expansion with a non-carbon fiber tow (110b; 220b) having the second coefficient of thermal expansion.

12. The method (300) of any of claims 8 to 11, wherein stacking the plurality of fiber layers (224, 226) includes:
forming a first portion (212) of the fiber reinforced composite material (206) having a first number of fiber layers (224, 226); and
forming a second portion (214) of the fiber reinforced composite material (206) having a second number of fiber layers greater than the first number of fiber layers, wherein the second portion (214) of the fiber reinforced composite material (206) includes the coefficient of thermal expansion that is equal to the target coefficient of thermal expansion of the aerospace component (200).

13. The method (300) of any of claims 8 to 12, wherein:
the aerospace component (100; 200) is formed of at least one of a metal or a metal alloy; and/or
the method (300) further comprises dispersing a plurality of ceramic particles in the carbon matrix (112) of the fiber reinforced composite material (106; 206).

14. An aerospace component (100; 200), comprising:
a first structure (102; 202) formed of a first material (108), the first material (108) comprising at least one of a metal or a metal alloy; and
the fiber reinforced composite structure (106; 206) of any of claims 1 to 7 mounted to the first structure (102; 202), wherein a coefficient of thermal expansion of the fiber reinforced composite structure (106; 206) is equal to a coefficient of thermal expansion of the first material (108).

15. The aerospace component (100; 200) of claim 14, wherein the fiber reinforced composite structure (106; 206) includes a plurality of ceramic particles dispersed in the carbon matrix (112).

## Patentansprüche

1. Verbundstruktur (104; 204), Folgendes umfassend:
ein faserverstärktes Verbundmaterial (106; 206), Folgendes beinhaltend:
eine Vielzahl von Faserschichten (114; 224, 226); und
eine Kohlenstoffmatrix (112), die die Vielzahl von Faserschichten (114; 224, 226) umgibt;
wobei eine erste Faserschicht (224) der Vielzahl von Faserschichten (114; 224, 226) einen ersten Kohlenstofffaserstrang (110a; 220a) beinhaltet und eine zweite Faserschicht (226) der Vielzahl von Faserschichten (114; 224, 226) einen Nicht-Kohlenstofffaserstrang (110b; 220b) beinhaltet,
wobei der erste Kohlenstofffaserstrang (110a; 220a) einen ersten Wärmeausdehnungskoeffizienten aufweist und der Nicht-Kohlenstofffaserstrang (110b; 220b) einen zweiten Wärmeausdehnungskoeffizienten aufweist, der größer als der erste Wärmeausdehnungskoeffizient ist,
**dadurch gekennzeichnet, dass**:
die Vielzahl von Faserschichten (114; 224, 226) eine Vielzahl von Kohlenstofffaserschichten beinhaltet, die mit einer Vielzahl von Nicht-Kohlenstofffaserschichten verschachtelt ist, wobei die Vielzahl von Kohlenstofffaserschichten die erste Faserschicht (224) beinhaltet und die Vielzahl von Nicht-Kohlenstofffaserschichten die zweite Faserschicht (226) beinhaltet.

2. Verbundstruktur (204) nach Anspruch 1, wobei ein erster Abschnitt (212) des faserverstärkten Verbundmaterials (206) eine erste Anzahl von Faserschichten umfasst und wobei ein zweiter Abschnitt (214) des faserverstärkten Verbundmaterials (206) eine zweite Anzahl von Faserschichten umfasst, die größer als die erste Anzahl von Faserschichten ist.

3. Verbundstruktur (204) nach Anspruch 2, ferner umfassend ein Befestigungselement (210), das sich durch den zweiten Abschnitt (214) des faserverstärkten Verbundmaterials (206) hindurch befindet, wobei ein Wärmeausdehnungskoeffizient des faserverstärkten Verbundmaterials (206) in dem zweiten Abschnitt (214) des faserverstärkten Verbundmaterials (206) gleich einem Wärmeausdehnungskoeffizienten des Befestigungselements (210) ist.

4. Verbundstruktur (204) nach Anspruch 2 oder 3, wobei sich ein Wärmeausdehnungskoeffizient des faserverstärkten Verbundmaterials (206) in dem ersten Abschnitt (212) des faserverstärkten Verbundmaterials (206) von einem Wärmeausdehnungskoeffizienten des faserverstärkten Verbundmaterials (206) in dem zweiten Abschnitt (214) des faserverstärkten Verbundmaterials (206) unterscheidet.

5. Verbundstruktur (104; 204) nach einem der vorhergehenden Ansprüche, ferner umfassend eine Beschichtung (105), die über dem faserverstärkten Verbundmaterial (106; 206) gebildet ist, wobei ein Wärmeausdehnungskoeffizient des faserverstärkten Verbundmaterials (106; 206) gleich einem Wärmeausdehnungskoeffizienten der Beschichtung (105) ist.

6. Verbundstruktur nach einem der vorhergehenden Ansprüche, wobei ein Wärmeausdehnungskoeffizient des faserverstärkten Verbundmaterials (106; 206) null ist.

7. Verbundstruktur nach einem der vorhergehenden Ansprüche, wobei der Nicht-Kohlenstofffaserstrang (110b) der zweiten Faserschicht mindestens eines von einer Siliziumkarbidfaser oder einer Siliziumnitridfaser ist.

8. Verfahren (300) zum Herstellen einer Verbundstruktur (104; 204) zur Verwendung in Verbindung mit einer Luft- und Raumfahrtkomponente (100; 200), die einen Zielwärmeausdehnungskoeffizienten aufweist, wobei das Verfahren (300) Folgendes umfasst:
Bilden eines faserverstärkten Verbundmaterials (106; 206) durch:
Stapeln einer Vielzahl von Faserschichten (114; 224, 226), wobei die Vielzahl von Faserschichten (114; 224, 226) eine Vielzahl von Kohlenstofffasern (110a; 220a) und eine Vielzahl von Nicht-Kohlenstofffasern (110b; 220b) beinhaltet, wobei die Kohlenstofffasern der Vielzahl von Kohlenstofffasern (110a; 220a) einen ersten Wärmeausdehnungskoeffizienten aufweisen und die Nicht-Kohlenstofffasern der Vielzahl von Nicht-Kohlenstofffasern (110b; 220b) einen zweiten Wärmeausdehnungskoeffizienten aufweisen, wobei der zweite Wärmeausdehnungskoeffizient größer als der erste Wärmeausdehnungskoeffizient ist; und
Bilden einer Kohlenstoffmatrix (112), die die Vielzahl von Faserschichten (114; 224, 226) umgibt,
wobei ein Wärmeausdehnungskoeffizient von mindestens einem Abschnitt des faserverstärkten Verbundmaterials (106; 206) gleich dem Zielwärmeausdehnungskoeffizienten der Luft- und Raumfahrtkomponente (100; 200) ist,
**dadurch gekennzeichnet, dass**:
Stapeln der Vielzahl von Faserschichten (114; 224, 226) Verschachteln einer Vielzahl von Kohlenstofffaserschichten (224) mit einer Vielzahl von Nicht-Kohlenstofffaserschichten (226) beinhaltet, wobei die Vielzahl von Kohlenstofffaserschichten die Vielzahl von Kohlenstofffasern (110a; 220a) beinhaltet und die Vielzahl von Nicht-Kohlenstofffaserschichten die Vielzahl von Nicht-Kohlenstofffasern (110b; 220b) beinhaltet.

9. Verfahren (300) nach Anspruch 8, wobei eine erste Faserschicht (224) der Vielzahl von Faserschichten (114; 224, 226) einen ersten Kohlenstofffaserstrang (110a; 220a) beinhaltet, der den ersten Wärmeausdehnungskoeffizienten aufweist, und wobei eine zweite Faserschicht (226) der Vielzahl von Faserschichten (114; 224, 226) einen Nicht-Kohlenstofffaserstrang (110b; 220b) beinhaltet, der den zweiten Wärmeausdehnungskoeffizienten aufweist.

10. Verfahren (300) nach Anspruch 9, ferner umfassend Bilden der zweiten Faserschicht (226) durch Verweben des Nicht-Kohlenstofffaserstrangs (110b; 220b) mit einem zweiten Kohlenstofffaserstrang (110a; 220a), der den ersten Wärmeausdehnungskoeffizienten aufweist.

11. Verfahren (300) nach Anspruch 9, ferner umfassend Bilden jeder Faserschicht (114; 224, 226) der Vielzahl von Faserschichten (114; 224, 226) durch Verweben eines Kohlenstofffaserstrangs (110a; 220a), der den ersten Wärmeausdehnungskoeffizienten aufweist, mit einem Nicht-Kohlenstofffaserstrang (110b; 220b), der den zweiten Wärmeausdehnungskoeffizienten aufweist.

12. Verfahren (300) nach einem der Ansprüche 8 bis 11, wobei Stapeln der Vielzahl von Faserschichten (224, 226) Folgendes beinhaltet:
Bilden eines ersten Abschnitts (212) des faserverstärkten Verbundmaterials (206), das eine erste Anzahl von Faserschichten (224, 226) aufweist; und
Bilden eines zweiten Abschnitts (214) des faserverstärkten Verbundmaterials (206), das eine zweite Anzahl von Faserschichten aufweist, die größer als die erste Anzahl von Faserschichten ist, wobei der zweite Abschnitt (214) des faserverstärkten Verbundmaterials (206) den Wärmeausdehnungskoeffizienten beinhaltet, der gleich dem Zielwärmeausdehnungskoeffizienten der Luft- und Raumfahrtkomponente (200) ist.

13. Verfahren (300) nach einem der Ansprüche 8 bis 12, wobei:
die Luft- und Raumfahrtkomponente (100; 200) aus mindestens einem von einem Metall oder einer Metalllegierung gebildet ist; und/oder
das Verfahren (300) ferner Dispergieren einer Vielzahl von Keramikpartikeln in der Kohlenstoffmatrix (112) des faserverstärkten Verbundmaterials (106; 206) umfasst.

14. Luft- und Raumfahrtkomponente (100; 200), Folgendes umfassend:
eine erste Struktur (102; 202), die aus einem ersten Material (108) gebildet ist, wobei das erste Material (108) mindestens eines von einem Metall oder einer Metalllegierung umfasst; und
die faserverstärkte Verbundstruktur (106; 206) nach einem der Ansprüche 1 bis 7, die an der ersten Struktur (102; 202) montiert ist, wobei ein Wärmeausdehnungskoeffizient der faserverstärkten Verbundstruktur (106; 206) gleich einem Wärmeausdehnungskoeffizienten des ersten Materials (108) ist.

15. Luft- und Raumfahrtkomponente (100; 200) nach Anspruch 14, wobei die faserverstärkte Verbundstruktur (106; 206) eine Vielzahl von in der Kohlenstoffmatrix (112) dispergierten Keramikpartikeln beinhaltet.

## Revendications

1. Structure composite (104 ; 204), comprenant :
un matériau composite renforcé de fibres (106 ; 206) comportant :
une pluralité de couches de fibres (114 ; 224, 226) ; et
une matrice de carbone (112) entourant la pluralité de couches de fibres (114 ; 224, 226) ;
dans laquelle une première couche de fibres (224) de la pluralité de couches de fibres (114 ; 224, 226) comporte un premier câble de fibres de carbone (110a ; 220a), et une seconde couche de fibres (226) de la pluralité de couches de fibres (114 ; 224, 226) comporte un câble de fibres non carbonées (110b ; 220b), dans laquelle le premier câble de fibres de carbone (110a ; 220a) a un premier coefficient de dilatation thermique, et le câble de fibres non carbonées (110b ; 220b) a un second coefficient de dilatation thermique qui est supérieur au premier coefficient de dilatation thermique,
**caractérisée en ce que** :
la pluralité de couches de fibres (114 ; 224, 226) comporte une pluralité de couches de fibres de carbone entrelacées avec une pluralité de couches de fibres non carbonées, la pluralité de couches de fibres de carbone comportant la première couche de fibres (224), et la pluralité de couches de fibres non carbonées comportant la seconde couche de fibres (226).

2. Structure composite (204) selon la revendication 1, dans laquelle une première partie (212) du matériau composite renforcé de fibres (206) comprend un premier nombre de couches de fibres, et dans laquelle une seconde partie (214) du matériau composite renforcé de fibres (206) comprend un second nombre de couches de fibres supérieur au premier nombre de couches de fibres.

3. Structure composite (204) selon la revendication 2, comprenant également un élément de fixation (210) situé à travers la seconde partie (214) du matériau composite renforcé de fibres (206), dans laquelle un coefficient de dilatation thermique du matériau composite renforcé de fibres (206) dans la seconde partie (214) du matériau composite renforcé de fibres (206) est égal à un coefficient de dilatation thermique de l'élément de fixation (210).

4. Structure composite (204) selon la revendication 2 ou 3, dans laquelle un coefficient de dilatation thermique du matériau composite renforcé de fibres (206) dans la première partie (212) du matériau composite renforcé de fibres (206) est différent d'un coefficient de dilatation thermique du matériau composite renforcé de fibres (206) dans la seconde partie (214) du matériau composite renforcé de fibres (206).

5. Structure composite (104 ; 204) selon une quelconque revendication précédente, comprenant également un revêtement (105) formé sur le matériau composite renforcé de fibres (106 ; 206), dans laquelle un coefficient de dilatation thermique du matériau composite renforcé de fibres (106 ; 206) est égal à un coefficient de dilatation thermique du revêtement (105).

6. Structure composite selon une quelconque revendication précédente, dans laquelle un coefficient de dilatation thermique du matériau composite renforcé de fibres (106 ; 206) est nul.

7. Structure composite selon une quelconque revendication précédente, dans laquelle le câble de fibres non carbonées (110b) de la seconde couche de fibres est au moins l'une d'une fibre en carbure de silicium ou d'une fibre en nitrure de silicium.

8. Procédé (300) de fabrication d'une structure composite (104 ; 204) pour une utilisation en conjonction avec un composant aérospatial (100 ; 200) ayant un coefficient de dilatation thermique cible, le procédé (300) comprenant :
la formation d'un matériau composite renforcé de fibres (106 ; 206) par :
l'empilement d'une pluralité de couches de fibres (114 ; 224, 226), la pluralité de couches de fibres (114 ; 224, 226) comportant une pluralité de fibres de carbone (110a ; 220a) et une pluralité de fibres non carbonées (110b ; 220b), les fibres de carbone de la pluralité de fibres de carbone (110a ; 220a) ayant un premier coefficient de dilatation thermique, et les fibres non carbonées de la pluralité de fibres non carbonées (110b ; 220b) ayant un second coefficient de dilatation thermique, le second coefficient de dilatation thermique étant supérieur au premier coefficient de dilatation thermique ; et
la formation d'une matrice de carbone (112) entourant la pluralité de couches de fibres (114 ; 224, 226),
dans lequel un coefficient de dilatation thermique d'au moins une partie du matériau composite renforcé de fibres (106 ; 206) est égal au coefficient de dilatation thermique cible du composant aérospatial (100 ; 200),
**caractérisé en ce que** :
l'empilement de la pluralité de couches de fibres (114 ; 224, 226) comporte l'entrelacement d'une pluralité de couches de fibres de carbone (224) avec une pluralité de couches de fibres non carbonées (226), la pluralité de couches de fibres de carbone comportant la pluralité de fibres de carbone (110a ; 220a), et la pluralité de couches de fibres non carbonées comportant la pluralité de fibres non carbonées (110b ; 220b).

9. Procédé (300) selon la revendication 8, dans lequel une première couche de fibres (224) de la pluralité de couches de fibres (114 ; 224, 226) comporte un premier câble de fibres de carbone (110a ; 220a) ayant le premier coefficient de dilatation thermique, et dans lequel une seconde couche de fibres (226) de la pluralité de couches de fibres (114 ; 224, 226) comporte un câble de fibres non carbonées (110b ; 220b) ayant le second coefficient de dilatation thermique.

10. Procédé (300) selon la revendication 9, comprenant également la formation de la seconde couche de fibres (226) en tissant le câble de fibres non carbonées (110b ; 220b) avec un second câble de fibres de carbone (110a ; 220a) ayant le premier coefficient de dilatation thermique.

11. Procédé (300) selon la revendication 9, comprenant également la formation de chaque couche de fibres (114 ; 224, 226) de la pluralité de couches de fibres (114 ; 224, 226) en tissant un câble de fibres de carbone (110a ; 220a) ayant le premier coefficient de dilatation thermique avec un câble de fibres non carbonées (110b ; 220b) ayant le second coefficient de dilatation thermique.

12. Procédé (300) selon l'une quelconque des revendications 8 à 11, dans lequel l'empilement de la pluralité de couches de fibres (224, 226) comporte :
la formation d'une première partie (212) du matériau composite renforcé de fibres (206) ayant un premier nombre de couches de fibres (224, 226) ; et
la formation d'une seconde partie (214) du matériau composite renforcé de fibres (206) ayant un second nombre de couches de fibres supérieur au premier nombre de couches de fibres, dans lequel la seconde partie (214) du matériau composite renforcé de fibres (206) comporte le coefficient de dilatation thermique qui est égal au coefficient de dilatation thermique cible du composant aérospatial (200).

13. Procédé (300) selon l'une quelconque des revendications 8 à 12, dans lequel :
le composant aérospatial (100 ; 200) est formé d'au moins l'un d'un métal ou d'un alliage métallique ; et/ou
le procédé (300) comprend également la dispersion d'une pluralité de particules de céramique dans la matrice de carbone (112) du matériau composite renforcé de fibres (106 ; 206).

14. Composant aérospatial (100 ; 200), comprenant :
une première structure (102 ; 202) formée d'un premier matériau (108), le premier matériau (108) comprenant au moins l'un d'un métal ou d'un alliage métallique ; et
la structure composite renforcée de fibres (106 ; 206) selon l'une quelconque des revendications 1 à 7 montée sur la première structure (102 ; 202), dans lequel un coefficient de dilatation thermique de la structure composite renforcée de fibres (106 ; 206) est égal à un coefficient de dilatation thermique du premier matériau (108).

15. Composant aérospatial (100 ; 200) selon la revendication 14, dans lequel la structure composite renforcée de fibres (106 ; 206) comporte une pluralité de particules de céramique dispersées dans la matrice de carbone (112).
